# EUROPÄISCHE PATENTSCHRIFT

(11) **EP 2 440 738 B1**
(45) Veröffentlichungstag und Bekanntmachung des Hinweises auf die Patenterteilung: **27.05.2015**
(21) Anmeldenummer: 10727331.0
(22) Anmeldetag: 08.06.2010
(51) Int. Cl.: E21B 17/04, F16L 47/04

(54) **VERBINDUNG ZWISCHEN EINEM GESTÄNGEROHR UND EINEM VERBINDER**
CONNECTION BETWEEN A DRILL PIPE AND A CONNECTOR
LIAISON ENTRE UNE TIGE CREUSE ET UN RACCORD

(30) Priorität: 08.06.2009 AT 8822009
(43) Veröffentlichungstag der Anmeldung: 18.04.2012
(73) Patentinhaber: think and vision GmbH, 8700 Leoben (AT)
(72) Erfinder: LAMIK, Abdelrhani, A-8700 Leoben (AT); LAMIK-THONHAUSER, Bouchra, A-8792 St. Peter-Freienstein (AT); KARPF, Robert, A-8600 Bruck/Mur (AT)
(74) Vertreter: Beer & Partner Patentanwälte KG
(86) Internationale Anmeldenummer: PCT/AT2010/000201
(87) Internationale Veröffentlichungsnummer: WO 2010/141968

(56) Entgegenhaltungen:
- WO-A1-99/17045
- US-A- 4 548 428
- US-A- 4 810 010
- US-A- 5 332 049
- US-A1- 2004 219 831

## Beschreibung

Die Erfindung betrifft eine Verbindung zwischen einem Gestängerohr aus kohle- oder glasfaserverstärktem Kunststoff und einem rohrförmigen, vorzugsweise aus Metall bestehenden, Verbinder, der teilweise in einem Ende des Gestängerohres aufgenommen und mit diesem verklebt ist.

Die nachhaltige Nutzung von bestehender Infrastruktur am Land ebenso wie auch "Off-shore" erfordert es, immer weiter oder tiefer zu bohren. Es gibt eine Reihe von Anwendungen, die das horizontale Weitbohren nützen würden, d.h. von bestehenden Plattformen mehr Erdöl aus einem bestehenden Feld zu fördern und den Entölungsgrad der Lagerstätte zu erhöhen.

Das horizontale Weitbohren ist erheblich durch das Gewicht und die die Reibungskräfte bestimmende "Normalkraft" des Bohrstranges limitiert. Dabei wird die Zugbelastung bzw. Knickung negativ beeinflusst, sowie durch die limitierte Durchmesserauswahl die Bohrlochhydraulik (Fließgeschwindigkeit gegenüber Druckverlusten) maßgeblich eingeschränkt.

In diesem Zusammenhang sind Bohrungen bis zu einer Weite von ca. 12 km die Grenze, die man mit dem heute dominierenden Material "Stahl" und der derzeit verwendeten Bohrtechnik erreichen kann. Ähnlich verhält es sich für tiefe Bohrungen, wo das Eigengewicht des Stranges die Tiefe einschränkt und Bohrungen jenseits von 8 km größte Risiken mit sich bringen. Aluminium als Bohrstrangmaterial hat sich nicht als Lösung dieser Probleme bewährt und kommt selten zum Einsatz. Alternativen dazu sind glas- oder kohlefaserverstärkte Kunststoffe ("Composites").

Ein erheblicher Faktor, der dem Einsatz von CFK oder GFK-Bohrgestängen im Weg steht, ist die Gewährleistung einer robusten Verbindung zwischen den CFK- oder GFK-Rohr und dem Stahlverbinder.

Ein bekanntes CFK-Bohrgestänge, das dieses Problem zu lösen versucht, ist in der US 5332049 A beschrieben. Mit diesem Bohrgestänge wird das Bohren von gekrümmten Bohrungen mit einem kurzen Krümmungsradius mit einer begrenzten Reichweite ermöglicht. Die US 5332049 A zeigt eine Methode zur Übertragung von Lasten zwischen einem CFK-Rohr und einem Verbinder aus Metall. Die Verbindung wird durch gleichzeitige Anwendung von Kleben und Stiften gewährleistet.

Die Befestigungsart gemäß der US 5332049 A zeigt jedoch eine Reihe von Nachteilen. Die Anwendung von Klebstoff und Stiften führt dazu, dass es im Falle eines Versagens zu einem Verlust des Bohrstranges kommt und es somit keine Möglichkeit gibt, den Bohrstrang aus dem Bohrloch zu holen. Es gibt keine effektive Methode, um sicherzustellen, dass der Klebstoff gleichmäßig verteilt und gleichmäßig belastet ist. Außerdem führt ein Versagen der Verbindung infolge Torsionsbelastung automatisch zur Zerstörung der Axialbelastbarkeit der Bohrgestänge und somit zu einer Trennung der Verbindung. Aufgrund der unterschiedlichen Werkstoffeigenschaften (GFK oder CFK und Stahl) ist die Festigkeit der Verbindung limitiert. Der Dehnbereich des GFK- oder CFK-Werkstoffes kann vom Stahlverbinder nicht toleriert werden. Dies führt dazu, dass die maximale Scherspannung (Spannungskonzentration) am Übergang Stahl-CFK oder CFK liegt. Eine Zunahme der Axialbelastung führt zu einem Anstieg der lokalen Scherspannungen. In weiterer Folge kommt es zum lokalen Versagen der Klebeverbindung, was wiederum zur schnellen Ausbreitung der Fehlerstelle bis zum totalen Versagen der Verbindung führt. Die Bestrebungen zur Erhöhung der Festigkeit durch das Erhöhen der Klebelänge sind weitgehend zwecklos, da die lokale Spannungskonzentration am Übergang GFK- oder CFK-Stahl nur minimal von der Kleblänge abhängig ist.

Die WO 99/17045 A zeigt einen verbesserten CFK Bohrstrang. Ein Teil dieser Entwicklung ist die Verbindung zwischen dem Stahlverbinder und dem CFK-Bohrstrang. Diese Befestigungsart weist ebenfalls einige Nachteile auf. Es gibt eine hohe Spannungskonzentration am Nutgrund sowohl beim CFK-Rohr als auch beim Stahlverbinder. Dies führt unter dynamischen Beanspruchungen zur Rissentstehung, zur Rissausbreitung und schließlich zum vollständigen Versagen der Verbindung. Durch das komplexe Herstellungsverfahren ist es fast unmöglich, diese Methode in einen kontinuierlichen Prozess, z.B. dem sogenannten "Pullwinding", zu integrieren. Um die Axialtragfähigkeit zu erhöhen, wurden Nuten an der Verbinderoberfläche angebracht. Diese führen zum schlechteren Kontakt zwischen dem CFK-Rohr und dem Stahlverbinder. Eine Gewährleistung der Dichtheit unter hohen Drücken ist zweifelhaft. Sowohl die axialen als auch die tangentialen Nuten führen zur unvermeidlichen Krümmung der Kohlefaser, was zu komplexen Belastungen (komplexer Spannungszustand) der Fasern führt.

Die vorliegende Erfindung liegt daher die Aufgabe zu Grunde, eine neue Möglichkeit für den Anschluss zwischen einem CFK/GFK Gestängerohr und einem rohrförmigen, vorzugsweise aus Metall bestehenden, Verbinder zu schaffen.

Gelöst wird diese Aufgabe bei einer Verbindung der eingangs genannten Art dadurch, dass ein mit dem Verbinder formschlüssig verbundenes Druckelement im Bereich des Endes des Gestängerohres, in dem der Verbinder aufgenommen ist, auf die Außenseite des Endes des Gestängerohres drückt.

Bei der Erfindung wird die Übertragung der Belastungen vom CFK-Rohr zum Verbinder zusätzlich zur Klebeverbindung durch ein vorzugsweise als Klemmverbindung ausgeführtes Druckelement gewährleistet. Die Kombination der mechanischen Verbindung und der Kleberverbindung führt zu hoher Sicherheit gegen Durchrutschen und Verlust des Bohrstranges. Die Kraftübertragung erfolgt, anderes als im Stand der Technik gleichzeitig über die Außen- und Innenseite des Gestängerohres. Dies führt zu einer wesentlich geringeren Belastung der Klebeverbindung. Eine bevorzugte Ausführungsform der Erfindung ist dadurch gekennzeichnet, dass sich eine Kontaktfläche zwischen dem Ende des Gestängerohres und dem Verbinder zum Ende des Gestängerohres hin kegelförmig erweitert. Durch diese Form der mechanischen Verbindung wird gewährleistet, dass kein Verlust des Bohrstranges stattfindet, auch wenn die Klebeverbindung im ungünstigsten Fall versagt.

Bevorzugte Ausführungsformen der Erfindung sind Gegenstand der übrigen Unteransprüche.

Nachfolgend wird ein bevorzugtes Ausführungsbeispiel der Erfindung unter Bezugnahme auf die Zeichnungen detaillierter beschrieben.

Es zeigt:

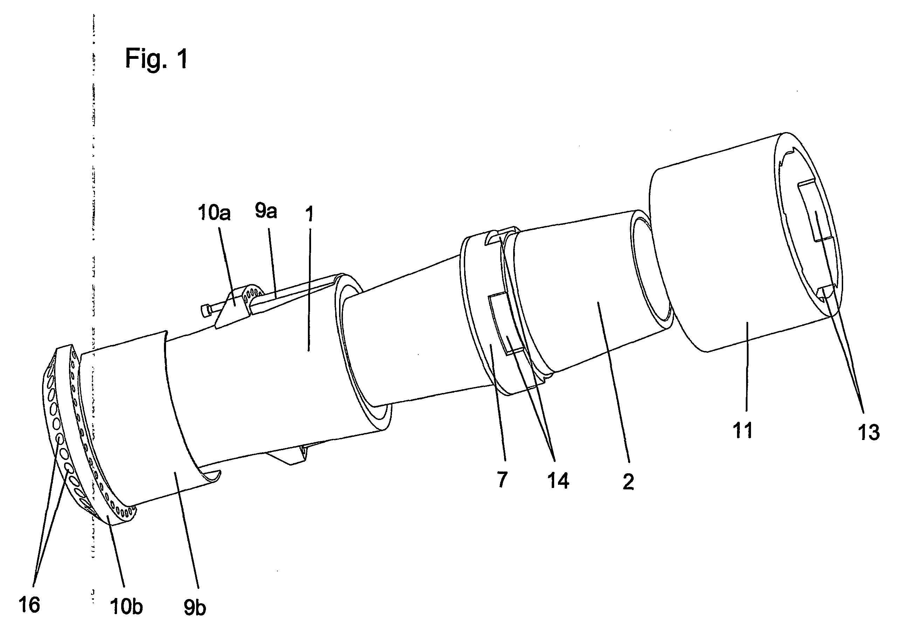

- Fig. 1: eine erfindungsgemäße Verbindung in einer explosionsartigen Darstellung,

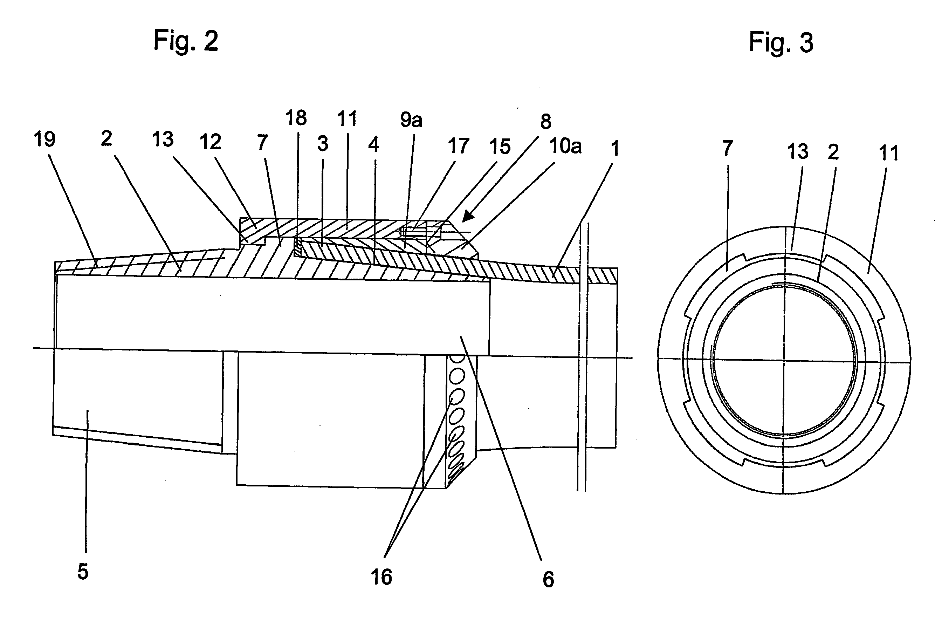

- Fig. 2: einen teilweisen Längsschnitt durch die erfindungsgemäße Verbindung im zusammengebauten Zustand
- Fig. 3: eine Stirnansicht auf die Verbindung gemäß Fig. 2 von links,
- Fig. 4: eine zweite Ausführungsform ein erfindungsgemäße Verbindung in einer explosionsartigen Darstellung,
- Fig. 5: einen teilweisen Längsschnitt durch die Verbindung von Fig. 4 im zusammengebauten Zustand,
- Fig. 6: die beiden Verbinder im Schrägriss vor dem Zusammenbau,
- Fig. 7: die beiden Verbinder im zusammengebauten Zustand und
- Fig. 8: die beiden Verbinder im zusammengebauten Zustand teilweise im Schnitt.

In den Zeichnungen ist eine Ausführungsform der Erfindung dargestellt, die ein Gestängerohr 1 aus kohle- oder glasfaserverstärktem Kunststoff und einen rohrförmigen Verbinder 2 aufweist, der vorzugsweise aus einem Metall wie Edelstahl besteht, und der teilweise in einem Ende 3 des Gestängerohres 1 aufgenommen und mit diesem an der Kontaktfläche 4 zwischen dem Ende 3 des Gestängerohres 1 und dem Verbinder 2 verklebt ist. Die Erfindung ist aber auch bei Gestängerohen und Verbindern aus anderen Werkstoffen anwendbar. Der Verbinder 2 ist rohrförmig ausgeführt und weist einen Innendurchmesser auf, der etwa dem Innendurchmesser des Gestängerohres 1 entspricht. Der Verbinder 2 weist auf beiden Seiten einen sich zu seinen Enden 5, 6 hin kegelförmig verjüngenden Außendurchmesser und in seiner Mitte einen ringförmigen Wulst 7 auf. In dem Ausmaß, in welchem sich der Außendurchmesser des Verbinders 2 zu seinem im Ende 3 des Gestängerohres 1 aufgenommenen Ende 6 hin verringert, erweitert sich das Ende 3 des Gestängerohres 1.

Zusätzlich zu der Klebeverbindung an der Kontaktfläche 4 zwischen dem Verbinder 2 und dem Gestängerohr 1 ist eine form- und kraftschlüssige Verbindung zwischen diesen beiden Teilen in Form eines Druckelementes 8 vorgesehen. Das Druckelement 8 besteht im wesentlichen aus einer im Schnitt keilförmigen Hülse 9, die im dargestellten Ausführungsbeispiel aus zwei halbkreisförmigen Teilen 9a, 9b besteht, einem Druckring 10, der im dargestellten Ausführungsbeispiel ebenfalls aus zwei halbkreisförmigen Teilen 10a, 10b besteht, sowie aus einer Außenhülse 11. Die keilförmige Hülse 9a, 9b weist eine zylindrische Außenfläche und eine kegelförmige Innenfläche auf, wobei der Kegelwinkel der Innenfläche dem Kegelwinkel der Außenseite des Endes 3 des Gestängerohres 1 entspricht. Die beiden Teile 9a, 9b der Hülse 9 sind im zusammengebauten Zustand der erfindungsgemäßen Verbindung vorzugsweise ebenfalls mit dem Ende 3 des Gestängerohres 1 verklebt.

Die Außenhülse 11 weist an einem Ende 12 nach innen ragende Vorsprünge 13 auf, welche in Vertiefungen 14 am Wulst 7 eingreifen und sich an den von den Vertiefungen 14 gebildeten Anlageflächen sowohl in axialer Richtung als auch in Umfangsrichtung abstützen. Der entweder einteilige oder wie im dargestellten Ausführungsbeispiel aus zwei Teilen bestehende Druckring 10a, 10b liegt an einer im dargestellten Ausführungsbeispiel im rechten Winkel zur Längsachse des Gestängerohres 1 ausgerichteten Gegenfläche 15 der keilförmigen Hülse 9a, 9b an und ist mittels nicht dargestellter Schrauben, welche durch Bohrungen 16 im Druckring 10a, 10b gesteckt und im Gewindebohrungen 17 in der Außenhülse 11 eingeschraubt werden, mit der Außenhülse 11 fest verbunden.

Wenn die Schrauben fest angezogen werden, wird die keilförmige Hülse 9a, 9b fest in den keilförmigen Spalt zwischen dem Ende 3 des Gestängerohres 1 und der Außenhülse 11 gedrückt, da sich die Außenhülse 11 auf der gegenüberliegenden Seite des Wulstes 7 abstützt. Auf diese Weise wird die keilförmige Hülse 9a, 9b des Druckelementes 8 fest gegen die Außenfläche des Endes 3 des Gestängerohres 1 gedrückt und Letzteres in weiterer Folge fest gegen den Verbinder 2. Somit wird das Ende 3 direkt zwischen der keilförmigen Hülse 9a, 9b des Druckelementes 8 und dem drunter liegenden Ende 6 des Verbinders 2 fest geklemmt. Um eine zusätzliche, feste Verbindung zwischen der keilförmigen Hülse 9a, 9b und der Außenhülse 11 zu schaffen, können diese Teile ebenfalls miteinander verklebt sein.

Um die Dichtheit zwischen dem Gestängerohr 1 und dem Verbinder 2 zu gewährleisten, ist zwischen der Stirnfläche des Endes 3 des Gestängerohres 1 und dem Wulst 7 des Verbinders 2 ein Dichtungsring 18 angeordnet.

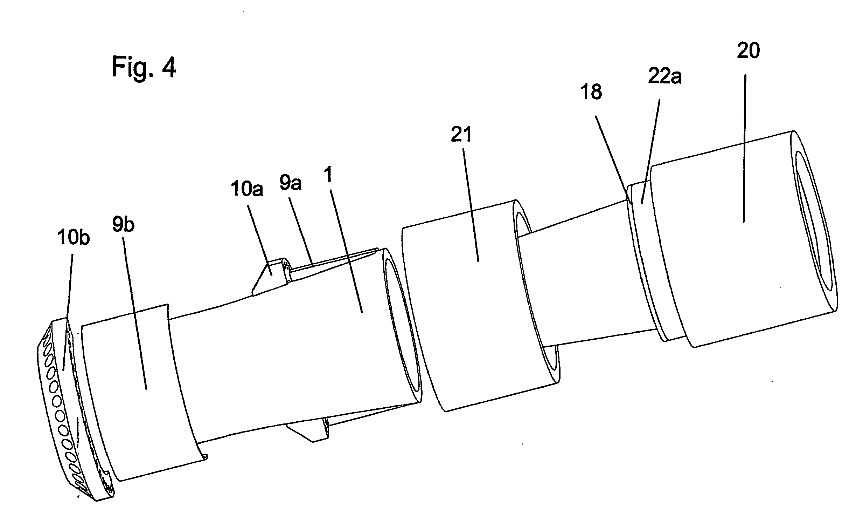

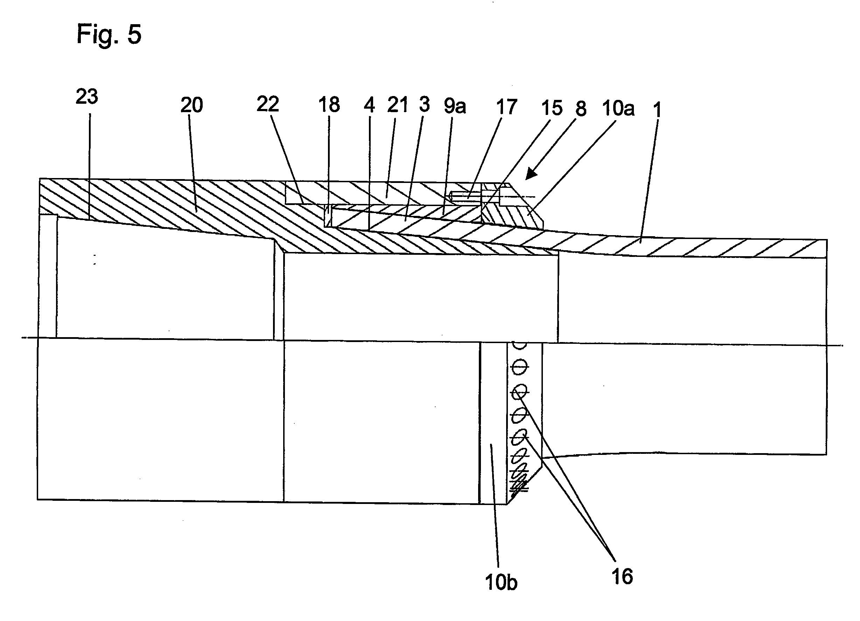

Am kegelförmigen Umfang des Endes 5 des Verbinders 2 ist ein Gewinde 19 angebracht, welches zur Verbindung mit einem zweiten Verbinder 20 dient, der, wie Fig. 4 und 5 dargestellt, an einem anzuschließenden weiteren Gestängerohr 1 angebracht ist. An dem Verbinder 20 ist in analoger Weise wie am Verbinder 2 ein sich am Ende 3 konisch erweiterndes Gestängerohr 1 an einer Kontaktfläche 4 angeklebt. Des weiteren wird wie beim Verbinder 2 zusätzlich zur Klebeverbindung an der Kontaktfläche 4 zwischen dem Verbinder 2 und dem Gestängerohr 1 eine form- und kraftschlüssige Verbindung zwischen diesen beiden Teilen in Form eines Druckelementes 8 vorgesehen. Das Druckelement 8 besteht wie vorhin beschrieben im wesentlichen aus einer im Schnitt keilförmigen Hülse 9, die im dargestellten Ausführungsbeispiel aus zwei halbkreisförmigen Teilen 9a, 9b besteht, einem Druckring 10, der im dargestellten Ausführungsbeispiel ebenfalls aus zwei halbkreisförmigen Teilen 10a, 10b besteht, sowie aus einer Außenhülse 21. Die keilförmige Hülse 9a, 9b weist eine zylindrische Außenfläche und eine kegelförmige Innenfläche auf, wobei der Kegelwinkel der Innenfläche dem Kegelwinkel der Außenseite des Endes 3 des Gestängerohres 1 entspricht. Die beiden Teile 9a, 9b der Hülse 9 sind im zusammengebauten Zustand der erfindungsgemäßen Verbindung vorzugsweise ebenfalls mit dem Ende 3 des Gestängerohres 1 verklebt.

Die Außenhülse 21 weist an einem Ende ein Innengewinde 22 auf, mit dem sie mit einem Außengewinde 22a am Verbinder 20 verschraubt ist. Der entweder einteilige oder wie im dargestellten Ausführungsbeispiel aus zwei Teilen bestehende Druckring 10a, 10b liegt an einer im dargestellten Ausführungsbeispiel im rechten Winkel zur Längsachse des Gestängerohres 1 ausgerichteten Gegenfläche 15 der keilförmigen Hülse 9a, 9b an und ist mittels nicht dargestellter Schrauben, welche durch Bohrungen 16 im Druckring 10a, 10b gesteckt und in Gewindebohrungen 17 in der Außenhülse 21 eingeschraubt werden, mit der Außenhülse 21 fest verbunden.

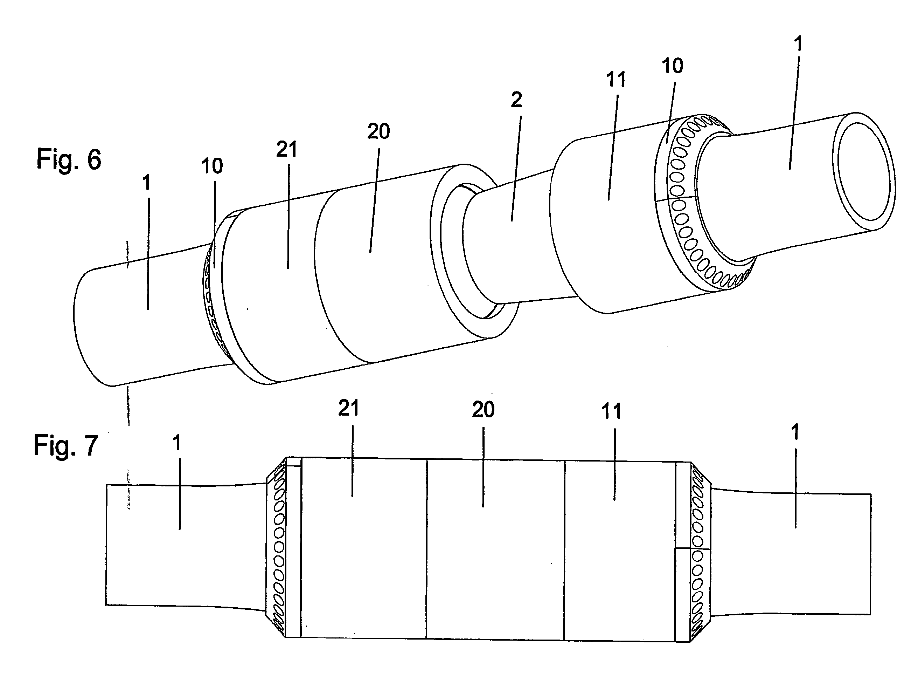

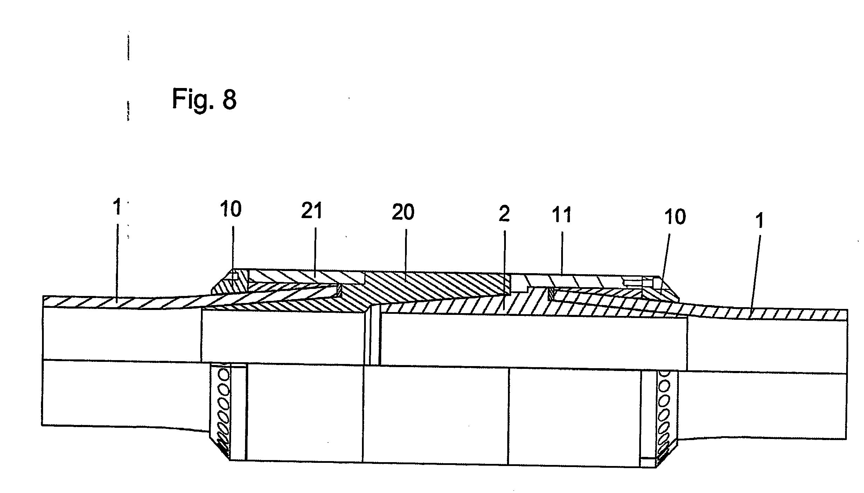

Der Verbinder 20 weist an seinem dem Gestängerohr 1 gegenüberliegenden Ende ein sich nach außen erweiterndes kegelförmiges Innengewinde 23 auf, mit dem er mit dem Außengewinde 19 des ersten Verbinders 2 verschraubt wird. In Fig. 6 sind die beiden Verbinder 2, 20 im Schrägriss vordem Zusammenbau dargestellt. In Fig. 7 und 8 sind die beiden Verbinder 2, 20 mit den daran befestigte Gestängerohren 1 im zusammengebauten Zustand gezeigt.

Die erfindungsgemäße Verbindung weist unter anderem folgende Vorteile auf:
- Die Verbindung zwischen dem Gestängerohr 1 und den Verbindern 2, 20 ist gleichzeitig eine form-, kraft- und stoffschlüssige Verbindung. Die Kombination der form- und kraftschlüssigen Verbindung und der Klebeverbindung führt zu hoher Sicherheit gegen Durchrutschen und Verlust des Bohrstranges. Durch die form- und kraftschlüssige Verbindung wird gewährleistet, dass kein Verlust des Bohrstranges stattfindet, auch wenn die Klebeverbindung im ungünstigsten Fall versagt und durch die Torsionsbelastung durchdreht.
- Die Kraftübertragung erfolgt, anderes als im Stand der Technik, gleichzeitig über die Außen- und Innenseite der Gestängerohre 1. Dies führt zu einer wesentlich geringeren Belastung der Klebeverbindung.
- Die Herstellung der Gestängerohre 1 kann in einem kontinuierlichen Prozess, z.B. Pullwinding, durchgeführt werden, da die Gestängerohre 1 an ihrem Ende glatt bzw. ohne Nachbearbeitung ausgeführt sein können. Dadurch wird eine höhere und gleichmäßigere Qualität erreicht, was für die Auslegung und die Versagensvorhersage von großer Bedeutung ist.
- Es besteht die Möglichkeit, den Zusammenbauprozess in einem getrennten Prozess durchzuführen, wodurch ein automatisierter Zusammenbau möglich ist.

## Patentansprüche

1. Verbindung zwischen einem Gestängerohr (1) aus kohle- oder glasfaserverstärktem Kunststoff und einem rohrförmigen, vorzugsweise aus Metall bestehenden, Verbinder (2, 20), der teilweise in einem Ende (3) des Gestängerohres (1) aufgenommen und mit diesem verklebt ist, **dadurch gekennzeichnet, dass** ein mit dem Verbinder (2, 20) formschlüssig verbundenes Druckelement (8) im Bereich des Endes (3) des Gestängerohres (1), in dem der Verbinder (2, 20) aufgenommen ist, auf die Außenseite des Endes (3) des Gestängerohres (1) drückt.

2. Verbindung nach Anspruch 1, **dadurch gekennzeichnet, dass** sich eine Kontaktfläche (4) zwischen dem Ende (3) des Gestängerohres (1) und dem Verbinder (2, 20) zum Ende (3) des Gestängerohres (1) hin kegelförmig erweitert.

3. Verbindung nach Anspruch 1 oder 2, **dadurch gekennzeichnet, dass** das Druckelement (8) eine keilförmige Hülse (9a, 9b) aufweist, welche auf der Außenseite des Endes (3) des Gestängerohres (1) aufliegt und eine Gegenfläche (15) aufweist, an welcher ein mit dem Verbinder (2, 20) formschlüssig verbundener Druckring (10a, 10b) anliegt.

4. Verbindung nach Anspruch 3, **dadurch gekennzeichnet, dass** die Gegenfläche (15) in einem Winkel von etwa 90° zur Längserstreckung des Gestängerohres (1) ausgerichtet ist.

5. Verbindung nach Anspruch 3 oder 4, **dadurch gekennzeichnet, dass** die keilförmige Hülse (9a, 9b) eine Außenfläche aufweist, welche im wesentlichen zylindrisch ist.

6. Verbindung nach Anspruch 5, **dadurch gekennzeichnet, dass** das Druckelement (8) eine Außenhülse (11, 21) aufweist, welche am Verbinder (2, 20) formschlüssig angreift, und dass der Druckring (10a, 10b) mit der Außenhülse (11, 21) verschraubt ist.

7. Verbindung nach Anspruch 6, **dadurch gekennzeichnet, dass** die Außenfläche der keilförmigen Hülse (9a, 9b) an der Innenfläche der Außenhülse (11, 21) anliegt.

8. Verbindung nach Anspruch 6 oder 7, **dadurch gekennzeichnet, dass** der Verbinder (2) einen ringförmigen Wulst (7) mit einer Anlagefläche aufweist, an welcher sich die Außenhülse (11) auf der dem Druckring (10a, 10b) gegenüberliegenden Seite abstützt.

9. Verbindung nach Anspruch 8, **dadurch gekennzeichnet, dass** die Außenhülse (11) an einem Ende (12) nach innen ragende Vorsprünge (13) aufweist, welche in Vertiefungen (14) am Wulst (7) eingreifen und sich dort sowohl in axialer Richtung als auch in Umfangsrichtung abstützen.

10. Verbindung nach Anspruch 6 oder 7, **dadurch gekennzeichnet, dass** die Außenhülse (21) mit dem Verbinder (20) verschraubt (22, 22a) ist.

11. Verbindung nach einem der Ansprüche 1 bis 10, **dadurch gekennzeichnet, dass** zwischen dem Ende (3), vorzugsweise der Stirnfläche, des Gestängerohres (1) und dem Verbinder (2, 20) ein Dichtungsring (18) angeordnet ist.

## Claims

1. A connection between a drill pipe (1) made of carbon-fibre or glass-fibre reinforced plastic and a tubular connector (2, 20), preferably made from metal, which connector (2, 20) is partially accommodated in one end (3) of the drill pipe (1) and is bonded to the aforesaid, **characterised in that** a thrust element (8) connected with positive-locking fit to the connector (2, 20) in the region of the end (3) of the drill pipe (1) in which the connector (2, 20) is received presses onto the exterior of the end (3) of the drill pipe (1).

2. The connection according to claim 1, **characterised in that** a contact surface (4) between the end (3) of the drill pipe (1) and the connector (2, 20) conically widens towards the end (3) of the drill pipe (1).

3. The connection according to claim 1 or 2, **characterised in that** the thrust element (8) comprises a wedge-shaped sleeve (9a, 9b) which rests against the exterior of the end (3) of the drill pipe (1) and comprises a counter face (15) on which a thrust collar (10a, 10b) rests that is connected with positive-locking fit to the connector (2, 20).

4. The connection according to claim 3, **characterised in that** the counter face (15) is oriented at an angle of approximately 90° to the longitudinal extension of the drill pipe (1).

5. The connection according to claim 3 or 4, **characterised in that** the wedge-shaped sleeve (9a, 9b) comprises an external surface that is essentially cylindrical.

6. The connection according to claim 5, **characterised in that** the thrust element (8) comprises an external sleeve (11, 21) that engages the connector (2, 20) with positive fit, and **in that** the thrust collar (10a, 10b) is screwed to the external sleeve (11, 21).

7. The connection according to claim 6, **characterised in that** the external surface of the wedge-shaped sleeve (9a, 9b) rests against the interior surface of the external sleeve (11, 21).

8. The connection according to claim 6 or 7, **characterised in that** the connector (2) comprises a ring-shaped bulge (7) with a contact surface on which the external sleeve (11) is supported on the side opposite the thrust collar (10a, 10b).

9. The connection according to claim 8, **characterised in that** on one end (12) the external sleeve (11) comprises inwards-facing projections (13) that engage indentations (14) on the bulge (7) where they are supported both in the axial direction and in the circumferential direction.

10. The connection according to claim 6 or 7, **characterised in that** the external sleeve (21) is screwed (22, 22a) to the connector (20).

11. The connection according to any one of claims 1 to 10, **characterised in that** between the end (3), preferably of the front surface, of the drill pipe (1) and the connector (2, 20) a sealing ring (18) is arranged.

## Revendications

1. Liaison entre une tige creuse (1) en plastique renforcé par des fibres de carbone ou de verre et un raccord (2, 20) de forme tubulaire se composant de préférence de métal, lequel est partiellement réceptionné dans une extrémité (3) de la tige creuse (1) et est collé avec celle-ci, **caractérisée en ce qu'**un élément de pression (8) relié par complémentarité de formes au raccord (2, 20) exerce une pression, dans la zone de l'extrémité (3) de la tige creuse (1) dans laquelle le raccord (2, 20) est réceptionné, contre le côté extérieur de l'extrémité (3) de la tige creuse (1).

2. Liaison selon la revendication 1, **caractérisée en ce qu'**une surface de contact (4) entre l'extrémité (3) de la tige creuse (1) et le raccord (2, 20) s'élargit en forme de cône vers l'extrémité (3) de la tige creuse (1).

3. Liaison selon la revendication 1 ou 2, **caractérisée en ce que** l'élément de pression (8) présente un manche cunéiforme (9a, 9b) qui repose sur le côté extérieur de l'extrémité (3) de la tige creuse (1) et présente une surface antagonisme (15) contre laquelle repose une bague de serrage (10a, 10b) reliée par complémentarité de formes au raccord (2, 20).

4. Liaison selon la revendication 3, **caractérisée en ce que** la surface antagoniste (15) est orientée selon un angle de près de 90° par rapport à l'étendue longitudinale de la tige creuse (1).

5. Liaison selon la revendication 3 ou 4, **caractérisée en ce que** le manche cunéiforme (9a, 9b) présente une surface extérieure, laquelle est sensiblement cylindrique.

6. Liaison selon la revendication 5, **caractérisée en ce que** l'élément de pression (8) présente un manchon d'accouplement extérieur (11, 21) qui est en prise par complémentarité de formes avec le raccord (2, 20), et **en ce que** la bague de serrage (10a, 10b) est vissée avec le manchon d'accouplement extérieur (11, 21).

7. Liaison selon la revendication 6, **caractérisée en ce que** la surface extérieure du manche cunéiforme (9a, 9b) repose contre la surface intérieure du manche extérieur (11, 21).

8. Liaison selon la revendication 6 ou 7, **caractérisée en ce que** le raccord (2) présente un renflement (7) annulaire avec une surface de butée sur laquelle le manchon d'accouplement extérieur (11) est en appui sur le côté situé en vis-à-vis de la bague de serrage (10a, 10b).

9. Liaison selon la revendication 8, **caractérisé en ce que** le manche extérieur (11) présente, sur une extrémité (12), des saillies (13) se dressant vers l'intérieur, lesquelles sont en prise dans des creux (14) sur le renflement (7) et y sont en appui en direction axiale tout comme également en direction circonférentielle.

10. Liaison selon la revendication 6 ou 7, **caractérisée en ce que** le-manche extérieur (21) est vissé (22, 22a) avec le raccord (20).

11. Liaison selon l'une des revendications 1 à 10, **caractérisée en ce qu'**une bague d'étanchéité (18) est disposée entre l'extrémité (3), de préférence la surface frontale, de la tige creuse (1) et le raccord (2, 20).
